# EUROPÄISCHE PATENTSCHRIFT

(11) **EP 4 519 190 B1**
(45) Veröffentlichungstag und Bekanntmachung des Hinweises auf die Patenterteilung: **04.03.2026**
(21) Anmeldenummer: 23720636.2
(22) Anmeldetag: 28.04.2023
(51) Int. Cl.: B65H 19/12, H01M 10/04

(54) **TRANSPORTFAHRZEUG UND SYSTEM FÜR DIE ENERGIEZELLEN PRODUZIERENDE INDUSTRIE SOWIE VERFAHREN ZUM TRANSPORTIEREN EINER BOBINE**
TRANSPORT VEHICLE AND SYSTEM FOR THE ENERGY CELL-PRODUCING INDUSTRY, AND METHOD FOR TRANSPORTING A BOBBIN
VÉHICULE DE TRANSPORT ET SYSTÈME POUR INDUSTRIE DE PRODUCTION DE CELLULES ÉNERGÉTIQUES ET PROCÉDÉ DE TRANSPORT D'UNE BOBINE

(30) Priorität: 06.05.2022 DE 102022111358
(43) Veröffentlichungstag der Anmeldung: 12.03.2025
(73) Patentinhaber: Körber Technologies GmbH, 21033 Hamburg (DE)
(72) Erfinder: HORN, Matthias, 22926 Ahrensburg (DE); MEIER, Arnd, 21643 Beckdorf (DE); HAUL, Michael, 21529 Kröppelshagen (DE); HENNING, Axel, 22113 Oststeinbek (DE)
(74) Vertreter: Müller Verweyen
(86) Internationale Anmeldenummer: PCT/EP2023/061203
(87) Internationale Veröffentlichungsnummer: WO 2023/213695

(56) Entgegenhaltungen:
- EP-A1- 1 211 554
- WO-A1-2023/052420
- DE-A1- 3 931 985
- US-A1- 2011 206 439
- US-A1- 2014 353 125

## Beschreibung

Die vorliegende Erfindung betrifft ein Transportfahrzeug und ein System für die Energiezellen produzierende Industrie. Weiterhin betrifft die vorliegende Erfindung ein Verfahren zum Transportieren einer Bobine mit einem aufgewickelten bahnförmigen Material. Ein Transportfahrzeug zum Transport von Bobinen ist z. B. aus der EP 1 211 554 A1 bekannt.

Es ist prinzipiell aus dem Stand der Technik bekannt, Energiezellen oder auch Energiespeicher in Kraftfahrzeugen, sonstigen Landfahrzeugen, Schiffen, Flugzeugen oder auch in stationären Anlagen wie z.B. Photovoltaikanlagen in Form von Batteriezellen oder Brennstoffzellen zu verwenden, bei denen sehr große Energiemengen über größere Zeiträume gespeichert werden müssen. Dazu weisen solche Energiezellen eine Struktur aus einer Vielzahl von zu einem Stapel gestapelten Segmenten auf. Diese Segmente sind jeweils aus sich abwechselnden Anodenblättern und Kathodenblättern, die durch ebenfalls als Segmente hergestellte Separatorblätter voneinander getrennt sind, gebildet. Die Segmente werden in dem Herstellungsprozess vorgeschnitten und dann zu den Stapeln in der vorbestimmten Reihenfolge aufeinandergelegt und durch Laminieren miteinander verbunden.

Dabei werden die Elektrodenblätter, also die Anoden- und Kathodenblätter, üblicherweise ausgehend von einem sogenannten Tochtercoil gebildet, das wiederum ausgehend von einem Muttercoil gebildet wird. Das Muttercoil umfasst eine endliche, aufgewickelte Elektrodenbahn, wobei die Breite dieser Bahn zu groß ist, um daraus einen Zellstapel zu bilden. Daher wird das Muttercoil zunächst abgewickelt und in Längsrichtung geschnitten, so dass sich die Breite der Elektrodenbahn reduziert oder mehrere Elektrodenbahnen geringerer Breite gebildet werden. Eine so geschnittene Elektrodenbahn mit reduzierter Breite wird anschließend wieder als sogenanntes Tochtercoil aufgewickelt. Das Tochtercoil kann anschließend wieder abgewickelt werden, um daraus durch Schnitte in Querrichtung Segmente zu schaffen, die dann zur Bildung eines Zellstapels geeignet sind.

Auch die Segmente in Form von Separatorblättern werden ausgehend von Tochtercoils gebildet, indem die von dem jeweiligen Tochtercoil ablaufende Bahn in Querrichtung geschnitten wird.

Die Herstellung der Tochtercoils, findet in der Regel in einer ersten Produktionsmaschine statt, die von einer zweiten Produktionsmaschine zum Schneiden und Stapeln der Segmente räumlich beabstandet ist.

Coils werden allgemein auch als Bobinen bezeichnet. Somit können die vorangehend beschriebenen Tochtercoils auch als Bobinen bezeichnet werden.

Es ist grundsätzlich aus dem Stand der Technik bekannt, die Herstellung von Tochtercoils mittels der ersten Produktionsmaschine unter vordefinierten klimatischen Bedingungen durchzuführen, um eine hohe Qualität der Tochtercoils zu gewährleisten.

Schließlich findet auch das Querschneiden und Stapeln der Segmente in der zweiten Produktionsmaschine üblicherweise unter vordefinierten klimatischen Bedingungen statt.

Aufgabe der Erfindung ist es, ein Transportfahrzeug, ein System sowie ein korrespondierendes Verfahren anzugeben, das einen verbesserten Transport einer Bobine mit einem aufgewickelten bahnförmigen Material erlaubt.

Die Aufgabe wird durch die Merkmale der unabhängigen Ansprüche gelöst. Weitere bevorzugte Ausführungsformen der Erfindung sind den Unteransprüchen, den Figuren und der dazugehörigen Beschreibung zu entnehmen.

Gemäß einem ersten Aspekt dieser Anmeldung wird die Aufgabe durch ein Transportfahrzeug für die Energiezellen produzierende Industrie gelöst, das zum Transportieren einer Bobine mit einem aufgewickelten bahnförmigen Material eingerichtet ist, umfassend einen Bobinenträger, der zur Aufnahme einer Bobine eingerichtet ist, eine Transportkammer mit einem schließbaren Innenraum, in dem der Bobinenträger angeordnet ist, wobei die Transportkammer wenigstens eine Zugangseinrichtung umfasst, über die die Bobine in den Innenraum einsetzbar und/oder aus dem Innenraum entnehmbar ist.

Das vorgeschlagene Transportfahrzeug ermöglicht es, die Bobine in dem geschlossenen Innenraum der Transportkammer zu transportieren, so dass die Bobine vor den negativen Einflüssen der Umgebung geschützt werden kann. Gleichzeitig bewirkt der Bobinenträger, dass die Bobine während des Transports zuverlässig und sicher gelagert werden kann.

Während des Transports befindet sich die Transportkammer vorzugsweise in einem vollständig geschlossenen Zustand, so dass auch der Innenraum geschlossen ist; dies wird dadurch erreicht, dass alle vorhandenen Zugangseinrichtungen geschlossen sind.

Über die wenigstens eine Zugangseinrichtung ist der Innenraum der Transportkammer für die zu transportierende Bobine zugänglich. Vorzugsweise umfasst die Transportkammer genau zwei Zugangseinrichtungen. Über eine erste Zugangseinrichtung kann die Bobine dann in den Innenraum der Transportkammer gebracht werden, und über eine zweite Zugangseinrichtung kann die Bobine aus dem Innenraum der Transportkammer entnommen werden. Jede Zugangseinrichtung umfasst eine Zugangsöffnung sowie eine Tür, mit der die Zugangsöffnung verschließbar ist. Auf diese Weise kann der Innenraum der Transportkammer geschlossen werden.

Vorzugsweise ist das Transportfahrzeug als fahrerloses Transportfahrzeug ausgeführt. Auf diese Weise kann ein hoher Automatisierungsgrad beim Transport der Bobinen erreicht werden. Hierfür ist vorzugsweise eine Steuer- und/oder Regeleinheit vorgesehen, die über Sensoren mit Eingangsdaten versorgt wird. Diese werden dann von der Steuer- und/oder Regelungseinheit derart verarbeitet, dass Ausgangsdaten generiert werden, mit denen beispielsweise eine Lenk- und/oder eine Antriebseinheit angesteuert werden kann.

Weiter vorzugsweise umfasst das Transportfahrzeug ein Fahrwerk, über das es auf einem Boden bewegt werden kann. Grundsätzlich sind Fahrwerke möglich, die für eine Bewegung des Transportfahrzeugs auf Flächen, Straßen oder auf einem Schienensystem eingerichtet sind.

Vorzugsweise ist der Innenraum der Transportkammer von einer Umgebung des Transportfahrzeugs strömungstechnisch isoliert, wenn sich die eine oder mehreren Zugangseinrichtungen in einem geschlossenen Zustand befinden. Sofern mehr als eine Zugangseinrichtung vorgesehen ist, müssen sich also sämtliche Zugangseinrichtungen im geschlossenen Zustand befinden.

Unter einer strömungstechnischen Isolation der Transportkammer gegenüber der Umgebung ist im Sinne dieser Anmeldung zu verstehen, dass ein unerwünschter bzw. unkontrollierter Strömungsaustausch zwischen dem Innenraum der Transportkammer und der Umgebung verhindert wird. Dennoch umfasst die strömungstechnische Isolation im Sinne dieser Anmeldung auch die Möglichkeit, dass ein gezielter Strömungsaustausch zwischen dem Innenraum der Transportammer und der Umgebung stattfinden kann, beispielsweise mittels eines Kompressors zum Einstellen eines vordefinierten Luftdrucks im Innenraum oder durch Ventile. Weiterhin umfasst die strömungstechnische Isolation im Sinne dieser Anmeldung auch die Möglichkeit einer vollständigen strömungstechnischen Isolation, bei der der Innenraum hermetisch gegenüber der Umgebung abgedichtet ist.

Vorzugsweise ist die Transportkammer dazu eingerichtet, den Innenraum gegenüber einer Umgebung des Transportfahrzeugs vakuumdicht und/oder thermisch isolierend abzuschließen. Durch die vakuumdichte Ausführung der Transportkammer kann im Innenraum ein Luftdruck eingestellt werden, der deutlich von den Druckverhältnissen der Umgebung abweicht; der Unterschied des statischen Drucks zwischen der Umgebung und dem Innenraum der Transportkammer kann so mehrere bar betragen. Durch die thermische Isolierung der Wärmekammer kann energieeffizient eine von der Umgebung abweichende Temperatur im Innenraum eingestellt werden. Vorzugsweise weist die Wandung der thermisch isolierten Transportkammer einen Wärmedurchgangskoeffizient von weniger als 2 W/(m²K) auf, weiter vorzugsweise von weniger als 1 W/(m²K), insbesondere vorzugsweise weniger als 0,5 W/(m²K) auf. Auf diese Weise können im Innenraum der Transportkammer vordefinierte klimatische Bedingungen effizient aufrechterhalten werden.

Vorzugsweise umfasst der Bobinenträger eine Achse, die zur Aufnahme einer Bobine eingerichtet ist. Die Lagerung der Bobine während des Transports kann damit über ihre Nabe erfolgen, mittels derer die Bobine auch beim Abwickeln des bandförmigen Materials, beispielsweise auf einem Bobinenwechsler, gelagert ist. Die Bobine wird somit während des Transports vorwiegend nur solchen Beanspruchungen ausgesetzt, für die die Bobine ohnehin ausgelegt ist. Zum Offenbarungsgehalt dieser Anmeldung soll auch explizit ein Transportfahrzeug mit einer Bobine zählen, wobei die Bobine auf die Achse des Bobinenträgers aufgesetzt ist.

Der Bobinenträger kann auch beweglich gegenüber dem übrigen Transportfahrzeug ausgeführt sein. Auf diese Weise kann der Bobinenträger in unterschiedliche Positionen gebracht werden, die für die Aufnahme der Bobine durch den Bobinenträger, für die Abgabe der Bobine von dem Bobinenträger und/oder für den Transport der Bobine optimiert sind.

Gemäß einer weiteren bevorzugten Ausführungsform wird vorgeschlagen, dass die Transportkammer zwei einander gegenüberliegende Zugangseinrichtungen umfasst. Hierdurch kann eine erste Zugangseinrichtung zum Einsetzen der Bobine in die Transportkammer und eine zweite Zugangseinrichtung zum Entnehmen der Bobine aus der Transportkammer vorgesehen sein. Durch die gegenüberliegende Anordnung der beiden Zugangseinrichtungen kann das Be- und Entladen Transportkammer mit der Bobine in einer linearen Bewegung erfolgen, so dass die Handhabung der Bobine insgesamt vereinfacht wird.

Vorzugsweise weist die wenigstens eine Zugangseinrichtung eine Öffnungsquerschnittsfläche auf, wobei die Öffnungsquerschnittsfläche maximal dem 0,2-fachen einer Innenwandfläche der Transportkammer entspricht, weiter vorzugsweise maximal dem 0,1-fachen, insbesondere vorzugsweise maximal dem 0,05-fachen der Innenwandfläche. Durch das vorgeschlagene Verhältnis des Öffnungsquerschnittes in Bezug zu der Innenwandfläche wird erreicht, dass beim Be- und Entladen der Transportkammer mit einer Bobine der Luftaustausch über die Öffnungsquerschnittsfläche reduziert wird.

Erfindungsgemäß ist eine Klimatisierungseinrichtung vorgesehen, mit der ein vordefiniertes Klima im Innenraum der Transportkammer einstellbar ist. Mittels der Klimatisierungseinrichtung kann beispielsweise die Raumtemperatur, die relative Luftfeuchtigkeit, der statische Druck und/oder der Reinheitsgrad der Luft eingestellt werden. Vorzugsweise ist diese Klimatisierungseinrichtung als mobile Klimatisierungseinrichtung ausgeführt, die mit dem Transportfahrzeug verfahrbar ist.

Gemäß einem zweiten Aspekt dieser Anmeldung wird ein System für die Energiezellen produzierende Industrie vorgeschlagen, umfassend wenigstens eine stationäre Klimatisierungskammer mit jeweils einer stationären Zugangseinrichtung sowie ein Transportfahrzeug wie vorangehend beschrieben. Vorzugsweise sind die wenigstens eine stationäre Klimatisierungskammer und die Transportkammer derart aufeinander abgestimmt, dass eine Bobine unmittelbar von der wenigstens einen stationären Klimatisierungskammer an die Transportkammer übergeben werden kann und umgekehrt. Dabei wird vorzugsweise eine Zugangseinrichtung der Klimatisierungskammer an eine Zugangseinrichtung der Transportkammer gefahren, so dass die Transportkammer und eine stationäre Klimatisierungskammer sich "küssen", während die Bobine übergeben wird. Weiter vorzugsweise weisen die Zugangseinrichtungen der Transportkammer und der Klimatisierungskammer den gleichen Öffnungsquerschnitt auf.

Vorzugsweise sind eine erste und eine zweite stationäre Klimatisierungskammer vorgesehen; das Transportfahrzeug dient dann dazu, die Bobine von der ersten Klimatisierungskammer unter geschützten klimatischen Bedingungen in die zweite stationäre Klimatisierungskammer zu befördern. Die klimatischen Bedingungen sind daher bevorzugt in den beiden stationären Klimatisierungskammern sowie in der mobilen Transportkammer identisch oder nahezu identisch.

Vorzugsweise umfasst die erste und/oder zweite stationäre Klimatisierungskammer jeweils eine stationäre Klimatisierungseinrichtung, mit der ein vordefiniertes Klima im Innenraum der stationären Klimatisierungskammer einstellbar ist. Mittels der stationären Klimatisierungseinrichtung kann beispielsweise die Raumtemperatur, die relative Luftfeuchtigkeit, der statische Druck und/oder der Reinheitsgrad der Luft eingestellt werden.

Gemäß einer bevorzugten Ausführungsform wird vorgeschlagen, dass an einer Außenseite der wenigstens einen stationären Klimatisierungskammer und/oder an einer Außenseite der Transportkammer des Transportfahrzeugs ein Dichtelement vorgesehen ist, das dazu eingerichtet ist, einen Kanal zwischen einer Zugangseinrichtung einer stationären Klimatisierungskammer und einer Zugangseinrichtung der Transportkammer auszubilden. Der Kanal wird durch das Dichtelement folglich temporär ausgebildet, wenn das Transportfahrzeug entsprechend an eine stationäre Klimatisierungskammer herangefahren wird. Es hat sich beispielsweise für den Transport einer Bobine von einer ersten stationären Klimatisierungskammer zu einer zweiten stationären Klimatisierungskammer als vorteilhaft erwiesen, dass an jeder der stationären Klimatisierungskammern jeweils ein Dichtelement vorgesehen ist und die Transportkammer mit einer ersten und einer zweiten Zugangseinrichtung ausgestattet ist. So kann zwischen der Zugangseinrichtung der ersten stationären Klimatisierungskammer und der ersten Zugangseinrichtung der Transportkammer ein temporärer Kanal durch das Dichteelement ausgebildet werden; weiterhin kann durch das weitere Dichtelement ein temporärer Kanal zwischen der zweiten Zugangseinrichtung der Transportkammer und der Zugangseinrichtung der zweiten stationären Klimatisierungskammer ausgebildet werden.

Vorzugsweise ist dabei der durch das Dichtelement gebildete Kanal strömungstechnisch gegenüber der Umgebung des Transportfahrzeugs abgedichtet. Auf diese Weise kann eine Bobine über den Kanal zwischen einer stationären Klimatisierungskammer und der Transportkammer bewegt werden, ohne dass ihr Zustand durch Umwelteinflüsse negativ beeinträchtigt wird.

Es hat sich weiterhin als vorteilhaft erwiesen, wenn das Dichtelement durch einen Faltenbalg oder durch eine pneumatische Dichtung gebildet ist. Hierdurch kann trotz etwaiger Toleranzen beim Heranfahren des Transportfahrzeugs an die stationäre Klimatisierungskammer zuverlässig der temporäre Kanal ausgebildet werden.

Vorzugsweise ist bei Ausbildung des Kanals das jeweilige Dichtelement zwischen der Transportkammer und einer stationären Klimatisierungskammer angeordnet. Weiter vorzugsweise ist das Transportfahrzeug derart verfahrbar, dass das jeweilige Dichtelement bei Ausbildung des Kanals durch eine stationäre Klimatisierungskammer und durch die Transportkammer des Transportfahrzeugs mit einer Klemmkraft beaufschlagt wird. Die so auf das Dichtelement ausgeübte Klemmkraft bewirkt, dass das jeweilige Dichtelement beim Andocken des Transportfahrzeugs an die Klimatisierungskammer vorgespannt ist, so dass das Dichtelement an einer entsprechenden Kontaktfläche zuverlässig anliegt. Es kann so eine zuverlässigere strömungstechnische Abdichtung des Kanals gegenüber der Umgebung erreicht werden.

Es hat sich weiterhin als vorteilhaft erwiesen, wenn das Volumen des Innenraums der Transportkammer maximal 1/100 des Volumens der wenigstens einen stationären Klimatisierungskammer beträgt, vorzugsweise weniger als 1/500, weiter vorzugsweise weniger als 1/1000 der stationären Klimatisierungskammer. Sofern mehrere Klimatisierungskammern vorgesehen sind, wird als Referenz für das vorgeschlagene Verhältnis die kleinste der stationären Klimatisierungskammern herangezogen. Durch das vorgeschlagene Verhältnis der Volumina ist der Einfluss der Transportkammer beim Andocken an die stationäre Klimatisierungskammer relativ gering. Bei dieser Ausführungsform kann beispielsweise auf eine Klimatisierungseinrichtung der Transportkammer verzichtet werden, weil sich durch Andocken der Transportkammer an die stationäre Klimatisierungskammer rasch die klimatischen Bedingungen in der Transportkammer an diejenigen der stationären Klimatisierungskammer anpassen, ohne dass sich die klimatischen Bedingungen in der jeweiligen stationären Klimatisierungskammer signifikant ändern.

Gemäß einem dritten Aspekt dieser Anmeldung wird ein Verfahren zum Transportieren einer Bobine mit einem aufgewickelten bahnförmigen Material vom Innenraum einer ersten stationären Klimatisierungskammer in den Innenraum einer zweiten stationären Klimatisierungskammer unter Verwendung des vorangehend beschriebenen Systems vorgeschlagen, wobei die Bobine in der Transportkammer des Transportwagens von der ersten stationären Klimatisierungskammer zu der zweiten stationären Klimatisierungskammer gebracht wird.

Vorzugsweise umfasst das Verfahren die folgenden Verfahrensschritte:
a) Andocken der Transportkammer des Transportwagens an die erste stationäre Klimatisierungskammer;
b) anschließendes Übergeben einer Bobine von der ersten stationären Klimatisierungskammer an die Transportkammer des Transportfahrzeugs;
c) anschließendes strömungstechnisches Isolieren des Innenraums der Transportkammer gegenüber einer Umgebung des Transportfahrzeugs;
d) anschließendes Bewegen des Transportfahrzeugs zu der zweiten stationären Klimatisierungskammer;
e) anschließendes Andocken der Transportkammer an die zweite stationäre Klimatisierungskammer;
f) anschließendes Übergeben der Bobine von der Transportkammer an die zweite stationäre Klimatisierungskammer.

Unter einem Andocken der Transportkammer an einer der stationären Klimatisierungskammern ist im Sinne dieser Erfindung zu verstehen, dass die Kammern strömungstechnisch miteinander verbunden sind. Vorzugsweise erfolgt dies über den durch das Dichtelement ausgebildeten Kanal. Weiter vorzugsweise geschieht dies derart, dass ein von der Umgebung gekapselter Kanal, also ein hermetisch gegenüber der Umgebung abgedichteter Kanal ausgebildet wird, der die jeweilige stationäre Klimatisierungskammer mit der Transportkammer verbindet. Auf diese Weise kann die Bobine ohne schädliche Umwelteinflüsse in der Transportkammer des Transportfahrzeugs von der ersten stationären Klimatisierungskammer in die zweite stationäre Klimatisierungskammer transportiert werden.

Die Erfindung wird im Folgenden anhand bevorzugter Ausführungsformen unter Bezugnahme auf die beigefügten Figuren erläutert. Dabei zeigt:
- Fig. 1: eine perspektivische Darstellung einer ersten stationäre Klimatisierungskammer und eines Transportfahrzeugs;
- Fig. 2: eine perspektivische Darstellung einer Bobinenhandhabungseinrichtung, die einer ersten stationären Klimatisierungskammer zugeordnet ist, sowie ein Transportfahrzeug;
- Fig. 3: einen Verfahrensschritt a) eines Verfahrens zum Transportieren einer Bobine von einer ersten stationären Klimatisierungskammer in eine zweite stationäre Klimatisierungskammer;
- Fig. 4: einen Verfahrensschritt b) eines Verfahrens zum Transportieren einer Bobine von einer ersten stationären Klimatisierungskammer in eine zweite stationäre Klimatisierungskammer;
- Fig. 5: einen Verfahrensschritt c) eines Verfahrens zum Transportieren einer Bobine von einer ersten stationären Klimatisierungskammer in eine zweite stationäre Klimatisierungskammer;
- Fig. 6: einen Verfahrensschritt d) eines Verfahrens zum Transportieren einer Bobine von einer ersten stationären Klimatisierungskammer in eine zweite stationäre Klimatisierungskammer;
- Fig. 7: einen Verfahrensschritt e) eines Verfahrens zum Transportieren einer Bobine von einer ersten stationären Klimatisierungskammer in eine zweite stationäre Klimatisierungskammer; und
- Fig. 8: einen Verfahrensschritt f) eines Verfahrens zum Transportieren einer Bobine von einer ersten stationären Klimatisierungskammer in eine zweite stationäre Klimatisierungskammer.

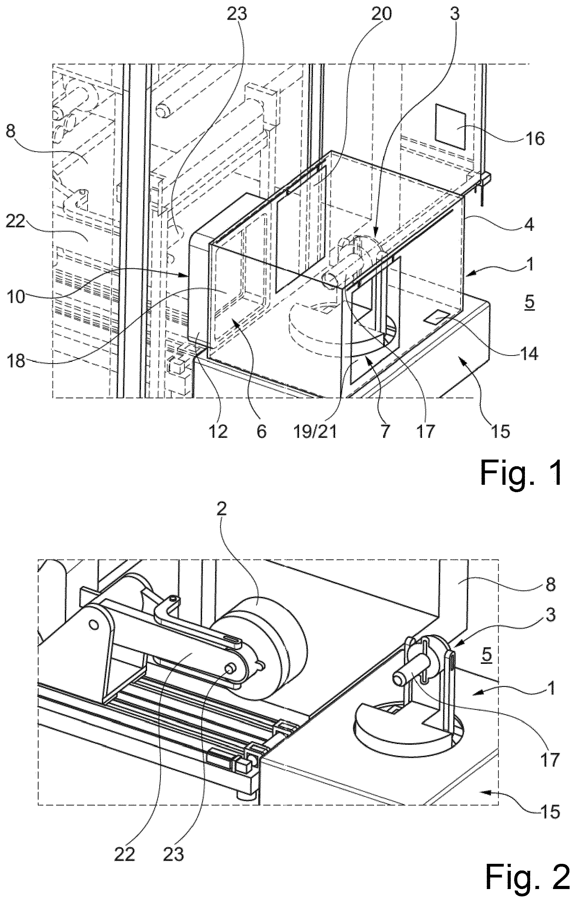

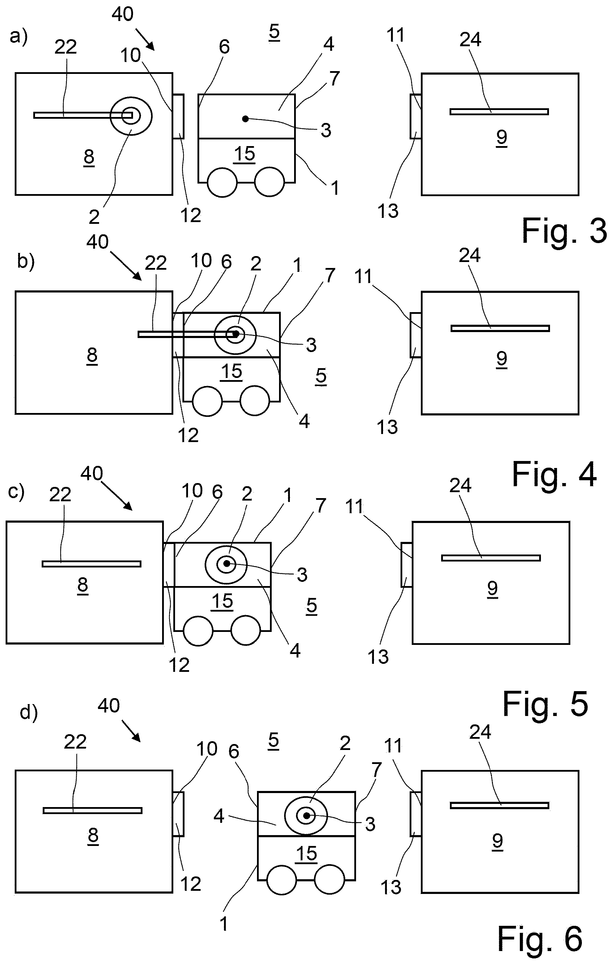

Figur 1 zeigt ein Transportfahrzeug 1, das an einer ersten stationären Klimatisierungskammer 8 angedockt ist. Das Transportfahrzeug 1 und die erste stationäre Klimatisierungskammer 8 sind Bestandteil eines Systems 40, das in den Figuren 3 bis 7 dargestellt ist.

Das Transportfahrzeug 1 umfasst ein Fahrwerk 15, mit dem das Transportfahrzeug 1 über einen Boden bewegt werden kann. Weiterhin umfasst das Transportfahrzeug 1 eine Transportkammer 4, in dessen Innenraum ein Bobinenträger 3 angeordnet ist. Der Bobinenträger 3 umfasst eine Achse 17, auf der eine Bobine 2 (vgl. Figur 2) gelagert werden kann.

Die Transportkammer 4 umfasst eine erste Zugangseinrichtung 6 und eine zweite Zugangseinrichtung 7, die gegenüberliegend der ersten Zugangseinrichtung 6 angeordnet ist. Die erste Zugangseinrichtung 6 umfasst eine Zugangsöffnung 18, die durch eine Zugangstür 20 in Form einer Schiebetür verschließbar ist. In dem in Figur 1 gezeigten Zustand befindet sich die erste Zugangseinrichtung 6 in einer geöffneten Stellung, so dass die Zugangsöffnung 18 nicht durch die Zugangstür 20 verschlossen ist. In entsprechender Weise umfasst auch die zweite Zugangseinrichtung 7 eine Zugangsöffnung 19, die durch eine Zugangstür 21 in Form einer Schiebetür verschließbar ist. In dem in Figur 1 gezeigten Zustand befindet sich die zweite Zugangseinrichtung 7 in einem geschlossenen Zustand. Die Transportkammer 4 ist derart eingerichtet, dass ihr Innenraum gegenüber einer Umgebung 5 der Transportkammer 4 vollständig strömungstechnisch isoliert ist, wenn die Zugangstüren 20 und 21 geschlossen sind; der Innenraum ist dann gegenüber einer Umgebung 5 des Transportfahrzeugs 1 hermetisch abgedichtet.

Weiterhin umfasst das Transportfahrzeug 1 eine mobile Klimatisierungseinrichtung 14, über die die klimatischen Bedingungen im Innenraum der Transportkammer 4 aktiv regelbar sind.

Zur Regelung der klimatischen Bedingungen im Inneren der ersten stationären Klimatisierungskammer 8 umfasst diese eine stationäre Klimatisierungseinrichtung 16.

An der Außenseite der ersten stationären Klimatisierungskammer 8 ist ein Dichtelement 12 vorgesehen, das eine stationäre Zugangseinrichtung 10 der ersten stationären Klimatisierungskammer 8 umgibt. Die stationäre Zugangseinrichtung 10 umfasst bei diesem Ausführungsbeispiel ebenfalls eine Zugangsöffnung sowie eine nicht dargestellte Zugangstür. In der in der Figur 1 dargestellten Anordnung ist der Innenraum der stationären Klimatisierungskammer 8 über ein einen Kanal ausbildendes Dichtelement 12 mit dem Innenraum der mobilen Transportkammer 4 verbunden. Somit kann die in der Figur 2 dargestellte Bobine 2 über den durch das Dichtelement 12 gebildeten Kanal vom Inneren der ersten stationären Klimatisierungskammer 8 in den Innenraum der Transportkammer 4 gebracht werden. Dabei dichtet das Dichtelement 12 den Kanal gegenüber der Umgebung 5 hermetisch ab. Dies wird durch die Ausführung des Dichtelements 12 als Faltbalg erreicht, gegen den bei diesem Ausführungsbeispiel das Transportfahrzeug 1 gefahren wird, so dass das Dichtelement 12 zwischen der Transportkammer 4 und der stationären Klimatisierungskammer 8 verklemmt ist.

Figur 2 zeigt das Innere der stationären Klimatisierungskammer 8 sowie der Transportkammer 4, wobei zwecks besserer Darstellbarkeit die Wände der stationären Klimatisierungskammer 8 und der Transportkammer 4 nur teilweise dargestellt sind. Im Inneren der stationären Klimatisierungskammer 8 ist eine Bobinenhandhabungseinrichtung 22 vorgesehen, auf der eine Bobine 2 gelagert ist. Mittels der Bobinenhandhabungseinrichtung 22 kann die Bobine 2 an den Bobinenträger 3 des Transportfahrzeugs 1 übergeben werden. Sowohl die Bobinenhandhabungseinrichtung 22 als auch der Bobinenträger 3 umfassen eine Achse 17 bzw. 23, auf der die Bobine 2 lagerbar ist. Wie aus Figur 2 erkennbar ist, sind die beiden Achsen 17 und 23 parallel zueinander ausgerichtet. Durch entsprechendes Verstellen der Bobinenhandhabungseinrichtung 22 kann die Achse 23 in der Verlängerung der Achse 17 positioniert werden. Durch eine entsprechende Verschiebeeinrichtung, die Bestandteil der Bobinenhandhabungseinrichtung 22 oder des Bobinenträgers 3 sein kann, kann die Bobine 2 dann in Axialrichtung von der Achse 23 der Bobinenhandhabungseinrichtung 22 auf die Achse 17 des Bobinenträgers 3 geschoben werden. In entsprechender Weise kann die Bobine 2 dann wieder von dem Bobinenträger 3 entnommen werden.

Nachfolgend wird anhand der Figuren 3 bis 7 ein Verfahren zum Transportieren einer Bobine 3 mit einem aufgewickelten bahnförmigen Material vom Innenraum einer ersten stationären Klimatisierungskammer 8 in den Innenraum einer zweiten stationären Klimatisierungskammer 9 mittels des Transportfahrzeugs 1 beschrieben. Das Verfahren erfolgt unter Verwendung eines Systems 40 umfassend die erste stationären Klimatisierungskammer 8, ein Transportfahrzeug 1 sowie eine zweite stationäre Klimatisierungskammer 9.

Bei dem Transportfahrzeug 1 des Systems 40, das in den Figuren 3 bis 7 dargestellt ist, handelt es sich um das in den Figuren 1 und 2 dargestellte Transportfahrzeug 1. Grundsätzlich kann das nachfolgend beschriebene Verfahren aber auch mit einem davon abweichenden Transportfahrzeug 1 durchgeführt werden.

In der ersten stationären Klimatisierungskammer 8 ist bei diesem Ausführungsbeispiel eine erste, nicht dargestellte Produktionsmaschine zum Erzeugen von Tochtercoils aus Muttercoils vorgesehen. Die so generierten Tochtercoils, werden nachfolgend als Bobine 2 bezeichnet.

In der zweiten stationären Klimatisierungskammer 9 ist bei diesem Ausführungsbeispiel eine zweite, nicht dargestellte Produktionsmaschine vorgesehen. Diese zweite Produktionsmaschine umfasst eine Schneideinrichtung sowie eine Zellstapeleinrichtung. Mittels der Schneideinrichtung kann die von der Bobine 2 abgelaufene Materialbahn zur Bildung von Segmenten in Querrichtung geschnitten werden. Bei dem bahnförmigen Material kann es sich beispielsweise um ein Elektrodenbahn oder eine Separatorbahn handeln. Mittels der Zellstapeleinrichtung können die Segmente dann zur Bildung eines Zellstapels aufeinandergestapelt werden. Es versteht sich von selbst, dass die zweite Produktionsmaschine noch weitere Bearbeitungseinheiten umfassen kann, beispielsweise eine Laminiereinrichtung und/oder eine Einrichtung zum Bilden oder Anbringen von Ableiterfähnchen. Auf diese Weise können in der zweiten stationären Klimatisierungskammer Energiezellen hergestellt werden.

In den Figuren 3 bis 7 ist zu erkennen, dass an der Außenseite der ersten und zweiten stationären Klimatisierungskammer 8 und 9 jeweils ein Dichtelement 12, 13 vorgesehen ist, das die jeweilige stationäre Zugangseinrichtung 10, 11 unterbrechungsfrei umgibt. An dem Transportfahrzeug 1 ist bei diesem Ausführungsbeispiel kein entsprechendes Dichtelement vorgesehen. Grundsätzlich wäre es aber denkbar, zusätzlich an dem Transportfahrzeug 1 Dichtelemente vorzusehen, die mit den Dichtelementen 12 oder 13 der jeweiligen stationären Klimatisierungskammer 8, 9 korrespondiert. Weiterhin wäre es auch denkbar, die Dichtelemente 12, 13 anstatt an den stationären Klimatisierungskammern 8, 9 in entsprechender Weise an der Außenseite des Transportfahrzeugs 1 anzuordnen.

Figur 3 zeigt, wie in einem Verfahrensschritt a) das Andocken der Transportkammer 4 des Transportwagens 1 an die erste stationäre Klimatisierungskammer 8 erfolgt. Hierzu wird das Transportfahrzeug 1 in Richtung der ersten stationären Transportkammer 8 verfahren. In dem in Figur 3 gezeigten Zustand befinden sich noch sämtliche Zugangseinrichtungen 6, 7, 10, 11 in einem geschlossenen Zustand. Der Vorgang des Andockens ist daher in Figur 3 noch nicht vollständig abgeschlossen.

In der Figur 4 ist der Vorgang des Andockens dann abgeschlossen, d.h. die stationäre Klimatisierungskammer 8 ist über das einen Kanal ausbildende Dichtelement 12 derart mit der Transportkammer 4 verbunden, dass die Bobine 2 ohne eine Kontamination mit Umgebungsluft von der ersten stationären Klimatisierungskammer 8 an die Transportammer 4 übergeben werden kann. Dafür befinden sich die stationäre Zugangseinrichtung 10 und die Zugangseinrichtung 6 der Transportkammer 4 in einem geöffneten Zustand. Figur 4 zeigt somit den Verfahrensschritt b), in dem das Übergeben der Bobine 2 von der ersten stationären Klimatisierungskammer 8 an die Transportkammer 4 des Transportfahrzeugs 1 erfolgt. Weiterhin ist zu erkennen, dass das Übergeben der Bobine 2 mittels einer beweglichen Bobinenhandhabungseinrichtung 22 erfolgt.

Weiterhin wird in der in der Figur 5 dargestellten Position des Transportfahrzeugs 1, also noch während die Transportkammer 4 an dem Dichtelement 12 anliegt, sowohl die stationäre Zugangseinrichtung 10 als auch die Zugangseinrichtung 6 der Transportkammer 4 in den geschlossenen Zustand gebracht. In einem Verfahrensschritt c) wird also der Innenraum der Transportkammer 4 gegenüber der Umgebung 5 des Transportfahrzeugs 1 strömungstechnisch isoliert. Es versteht sich von selbst, dass zuvor die Bobinenhandhabungseinrichtung 22 wieder in die stationäre Klimatisierungskammer 8 zurückbewegt werden muss.

In Figur 6 ist dann ein Verfahrensschritt d) dargestellt, in dem das mit der Bobine 2 beladene Transportfahrzeug 1 zu der zweiten stationären Klimatisierungskammer 9 bewegt wird.

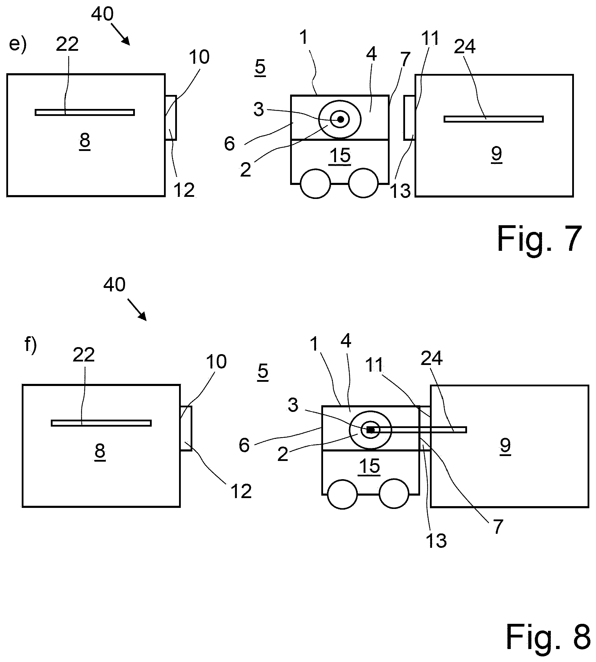

Figur 7 zeigt wie in einem Verfahrensschritt e) das Andocken der Transportkammer 4 an die zweite stationäre Klimatisierungskammer 9 erfolgt. In Figur 7 ist der Vorgang des Andockens jedoch noch nicht abgeschlossen. Wie auch beim Andocken der Transportkammer 4 an die erste stationäre Klimatisierungskammer 4 ist das Andocken erst dann abgeschlossen, wenn die Transportkammer 4 über das den Kanal bildenden Dichtelement 13 derart mit der zweiten stationären Klimatisierungskammer 9 verbunden ist, dass die Bobine 2 ohne eine Kontamination mit Umgebungsluft von der Transportkammer 4 an die zweite stationäre Klimatisierungskammer 9 übergeben werden kann. Dafür müssen sowohl die zweite Zugangseinrichtung 7 also auch die stationäre Zugangseinrichtung 11 der zweiten stationären Klimatisierungseinrichtung 9 in einen geöffneten Zustand gebracht werden.

Figur 8 zeigt den eigentlichen Vorgang der Übergabe der Bobine 2 von der Transportkammer 4 an die zweite stationäre Klimatisierungskammer 9. Dies erfolgt mit einer weiteren Bobinenhandhabungseinrichtung 24, die der zweiten stationären Klimatisierungskammer 9 zugeordnet ist. Im Ergebnis kann die Bobine 2 so mittels des Transportfahrzeugs 1 unter vordefinierten klimatischen Bedingungen, also geschützt von negativen Umwelteinflüssen, von der ersten stationären Transportkammer 8 in die zweite stationäre Transportkammer 9 gebracht werden.

Da es sich bei dem Transportfahrzeug 1 dieses Ausführungsbeispiels um ein fahrerloses Transportfahrzeug handelt, kann der Transport zwischen der ersten stationären Klimatisierungskammer 8 und der zweiten stationären Klimatisierungskammer 9 mit einem hohen Automatisierungsgrad erfolgen.

### Bezugszeichenliste:

- 1: Transportfahrzeug
- 2: Bobine
- 3: Bobinenträger
- 4: Transportkammer
- 5: Umgebung
- 6: erste Zugangseinrichtung
- 7: zweite Zugangseinrichtung
- 8: erste stationäre Klimatisierungskammer
- 9: zweite stationäre Klimatisierungskammer
- 10: stationäre Zugangseinrichtung
- 11: stationäre Zugangseinrichtung
- 12: Dichtelement
- 13: Dichtelement
- 14: Klimatisierungseinrichtung
- 15: Fahrwerk
- 16: Klimatisierungseinrichtung
- 17: Achse
- 18: Zugangsöffnung
- 19: Zugangsöffnung
- 20: Zugangstür
- 21: Zugangstür
- 22: Bobinenhandhabungseinrichtung
- 23: Achse
- 24: Bobinenhandhabungseinrichtung
- 40: System

## Patentansprüche

1. Transportfahrzeug (1) für die Energiezellen produzierende Industrie, das zum Transportieren einer Bobine (2) mit einem aufgewickelten bahnförmigen Material eingerichtet ist, umfassend
- einen Bobinenträger (3), der zur Aufnahme einer Bobine (2) eingerichtet ist,
- eine Transportkammer (4) mit einem schließbaren Innenraum, in dem der Bobinenträger (3) angeordnet ist, wobei
- die Transportkammer (4) wenigstens eine Zugangseinrichtung (6, 7) umfasst, über die die Bobine (2) in den Innenraum einsetzbar und/oder aus dem Innenraum entnehmbar ist, **dadurch gekennzeichnet, dass**
- eine Klimatisierungseinrichtung (14) vorgesehen ist, mit der ein vordefiniertes Klima im Innenraum der Transportkammer (4) einstellbar ist.

2. Transportfahrzeug (1) nach Anspruch 1, **dadurch gekennzeichnet, dass**
- der Innenraum der Transportkammer (4) von einer Umgebung (5) des Transportfahrzeugs (1) strömungstechnisch isoliert ist, wenn sich die eine oder mehreren Zugangseinrichtungen (6, 7) in einem geschlossenen Zustand befinden.

3. Transportfahrzeug (1) nach einem der vorangehenden Ansprüche, **dadurch gekennzeichnet, dass**
- die Transportkammer (4) dazu eingerichtet ist, den Innenraum gegenüber einer Umgebung (5) des Transportfahrzeugs (1) vakuumdicht und/oder thermisch isolierend abzuschließen.

4. Transportfahrzeug (1) nach einem der vorangehenden Ansprüche, **dadurch gekennzeichnet, dass**
- der Bobinenträger (3) eine Achse (17) umfasst, die zur Aufnahme einer Bobine (2) eingerichtet ist.

5. Transportfahrzeug (1) nach einem der vorangehenden Ansprüche, **dadurch gekennzeichnet, dass**
- die Transportkammer (4) zwei einander gegenüberliegende Zugangseinrichtungen (6, 7) umfasst.

6. Transportfahrzeug (1) nach einem der vorangehenden Ansprüche, **dadurch gekennzeichnet, dass**
- die wenigstens eine Zugangseinrichtung (6, 7) eine Öffnungsquerschnittsfläche aufweist, wobei
- die Öffnungsquerschnittsfläche maximal dem 0,2-fachen einer Innenwandfläche der Transportkammer (4) entspricht.

7. System (40) für die Energiezellen produzierende Industrie, umfassend
- wenigstens eine stationäre Klimatisierungskammer (8, 9) mit jeweils einer stationären Zugangseinrichtung (10, 11) sowie
- ein Transportfahrzeug (1) nach einem der vorangehenden Ansprüche.

8. System (40) nach Anspruch 7, **dadurch gekennzeichnet, dass**
- an einer Außenseite der wenigstens einen stationären Klimatisierungskammer (8, 9) und/oder an einer Außenseite der Transportkammer (4) des Transportfahrzeugs (1) ein Dichtelement (12, 13) vorgesehen ist, das dazu eingerichtet ist, einen Kanal zwischen einer Zugangseinrichtung (10, 11) einer stationären Klimatisierungskammer (8, 9) und einer Zugangseinrichtung (6, 7) der Transportkammer (4) auszubilden.

9. System (40) nach Anspruch 8, **dadurch gekennzeichnet, dass**
- der durch das Dichtelement (12, 13) gebildete Kanal strömungstechnisch gegenüber einer Umgebung (5) des Transportfahrzeugs (1) abgedichtet ist.

10. System (40) nach Anspruch 8 oder 9, **dadurch gekennzeichnet, dass**
- das Dichtelement (12, 13) durch einen Faltenbalg oder durch eine pneumatische Dichtung gebildet ist.

11. System (40) nach einem der Ansprüche 8 bis 10, **dadurch gekennzeichnet, dass**
- bei Ausbildung des Kanals das jeweilige Dichtelement (12, 13) zwischen der Transportkammer (4) und einer stationären Klimatisierungskammer (8, 9) angeordnet ist.

12. System (40) nach einem der Ansprüche 7 bis 11, **dadurch gekennzeichnet, dass**
- das Volumen des Innenraums der Transportkammer (4) maximal 1/100 des Volumens der wenigstens einen stationären Klimatisierungskammer (8, 9) beträgt.

13. Verfahren zum Transportieren einer Bobine (2) mit einem aufgewickelten bahnförmigen Material vom Innenraum einer ersten stationären Klimatisierungskammer (8) in den Innenraum einer zweiten stationären Klimatisierungskammer (9) unter Verwendung des Systems nach einem der Ansprüche 7 bis 12, wobei
- die Bobine (2) in der Transportkammer (4) des Transportwagens (1) von der ersten stationären Klimatisierungskammer (8) zu der zweiten stationären Klimatisierungskammer (9) gebracht wird.

14. Verfahren nach Anspruch 13, **gekennzeichnet durch** die folgenden Verfahrensschritte:
a) Andocken der Transportkammer (4) des Transportwagens (1) an die erste stationäre Klimatisierungskammer (8);
b) anschließendes Übergeben einer Bobine (2) von der ersten stationären Klimatisierungskammer (8) an die Transportkammer (4) des Transportfahrzeugs (1);
c) anschließendes strömungstechnisches Isolieren des Innenraums der Transportkammer (4) gegenüber einer Umgebung (5) des Transportfahrzeugs (1);
d) anschließendes Bewegen des Transportfahrzeugs (1) zu der zweiten stationären Klimatisierungskammer (9);
e) anschließendes Andocken der Transportkammer (4) an die zweite stationäre Klimatisierungskammer (9);
f) anschließendes Übergeben der Bobine (2) von der Transportkammer (4) an die zweite stationäre Klimatisierungskammer (9).

## Claims

1. Transport vehicle (1) for the energy cell producing industry, which is designed to transport a bobbin (2) with a coiled web-type material, said transport vehicle comprising
- a bobbin carrier (3) which is designed to receive a bobbin (2),
- a transport chamber (4) which has a closable interior in which the bobbin carrier (3) is arranged,
- the transport chamber (4) comprising at least one access arrangement (6, 7) via which the bobbin (2) can be inserted into the interior and/or removed from the interior, **characterized in that**
- an air conditioning device (14) is provided with which a predefined climate can be set in the interior of the transport chamber (4).

2. Transport vehicle (1) according to claim 1, **characterized in that**
- the interior of the transport chamber (4) is fluidically isolated from an environment (5) of the transport vehicle (1) if the one or more access arrangements (6, 7) are in a closed state.

3. Transport vehicle (1) according to either of the preceding claims,
**characterized in that**
- the transport chamber (4) is designed to seal off the interior from an environment (5) of the transport vehicle (1) in a vacuum-tight and/or thermally insulating manner.

4. Transport vehicle (1) according to any of the preceding claims,
**characterized in that**
- the bobbin carrier (3) comprises an axle (17) which is designed to receive a bobbin (2).

5. Transport vehicle (1) according to any of the preceding claims,
**characterized in that**
- the transport chamber (4) comprises two opposite access arrangements (6, 7).

6. Transport vehicle (1) according to any of the preceding claims,
**characterized in that**
- the at least one access arrangement (6, 7) has an opening cross-sectional area,
- the opening cross-sectional area corresponding at most to 0.2 times an inner wall surface of the transport chamber (4).

7. System (40) for the energy cell producing industry, comprising
- at least one stationary air conditioning chamber (8, 9) which has a stationary access arrangement (10, 11) in each case, and
- a transport vehicle (1) according to any of the preceding claims.

8. System (40) according to claim 7, **characterized in that**
- a sealing element (12, 13) is provided on an outside of at least one stationary air conditioning chamber (8, 9) and/or on an outside of the transport chamber (4) of the transport vehicle (1), which sealing element is designed to form a channel between an access arrangement (10, 11) of a stationary air conditioning chamber (8, 9) and an access arrangement (6, 7) of the transport chamber (4).

9. System (40) according to claim 8, **characterized in that**
- the channel formed by the sealing element (12, 13) is fluidically sealed off from an environment (5) of the transport vehicle (1).

10. System (40) according to claim 8 or 9, **characterized in that**
- the sealing element (12, 13) is formed by a folding bellows or by a pneumatic seal.

11. System (40) according to any of claims 8 to 10, **characterized in that**
- when forming the channel, the relevant sealing element (12, 13) is arranged between the transport chamber (4) and a stationary air conditioning chamber (8, 9).

12. System (40) according to any of claims 7 to 11, **characterized in that**
- the volume of the interior of the transport chamber (4) is at most 1/100 of the volume of the at least one stationary air conditioning chamber (8, 9).

13. Method for transporting a bobbin (2) with a coiled web-type material from an interior of a first stationary air conditioning chamber (8) into the interior of a second stationary air conditioning chamber (9) using the system according to any of claims 7 to 12,
- the bobbin (2) being brought in the transport chamber (4) of the transport vehicle (1) from the first stationary air conditioning chamber (8) to the second stationary air conditioning chamber (9).

14. Method according to claim 13, **characterized by** the following method steps:
a) docking the transport chamber (4) of the transport vehicle (1) onto the first stationary air conditioning chamber (8);
b) subsequently transferring a bobbin (2) from the first stationary air conditioning chamber (8) to the transport chamber (4) of the transport vehicle (1);
c) subsequently fluidically isolating the interior of the transport chamber (4) from an environment (5) of the transport vehicle (1);
d) subsequently moving the transport vehicle (1) to the second stationary air conditioning chamber (9);
e) subsequently docking the transport chamber (4) onto the second stationary air conditioning chamber (9);
f) subsequently transferring the bobbin (2) from the transport chamber (4) to the second stationary air conditioning chamber (9).

## Revendications

1. Véhicule de transport (1) pour l'industrie de production de cellules d'énergie, qui est configuré pour transporter une bobine (2) ayant un matériau enroulé en forme de bande, comprenant
- un porte-bobine (3) qui est configuré pour recevoir une bobine (2),
- une chambre de transport (4) avec un espace interne pouvant être fermé dans lequel le porte-bobine (3) est agencé, dans lequel
- la chambre de transport (4) comprend au moins un dispositif d'accès (6, 7) par l'intermédiaire duquel la bobine (2) peut être insérée dans l'espace interne et/ou peut être retirée de l'espace interne, **caractérisé en ce que**
- un dispositif de climatisation (14) est prévu, au moyen duquel un climat prédéfini peut être réglé dans l'espace interne de la chambre de transport (4).

2. Véhicule de transport (1) selon la revendication 1, **caractérisé en ce que**
- l'espace interne de la chambre de transport (4) est fluidiquement isolé d'un environnement (5) du véhicule de transport (1), lorsque les un ou plusieurs dispositifs d'accès (6, 7) sont dans un état fermé.

3. Véhicule de transport (1) selon l'une des revendications précédentes, **caractérisé en ce que**
- la chambre de transport (4) est configurée pour obturer l'espace interne par rapport à un environnement (5) du véhicule de transport (1) de façon étanche au vide et/ou thermiquement isolante.

4. Véhicule de transport (1) selon l'une des revendications précédentes, **caractérisé en ce que**
- le porte-bobine (3) comprend un axe (17) qui est configuré pour recevoir une bobine (2).

5. Véhicule de transport (1) selon l'une des revendications précédentes, **caractérisé en ce que**
- la chambre de transport (4) comprend deux dispositifs d'accès (6, 7) opposés l'un à l'autre.

6. Véhicule de transport (1) selon l'une des revendications précédentes, **caractérisé en ce que**
- ledit au moins un dispositif d'accès (6, 7) comporte une surface de section transversale d'ouverture, dans lequel
- la surface de section transversale d'ouverture correspond au maximum à 0,2 fois une surface de paroi intérieure de la chambre de transport (4).

7. Système (40) destiné à l'industrie de production de cellules d'énergie, comprenant :
- au moins une chambre de climatisation fixe (8, 9) comportant respectivement un dispositif d'accès fixe (10, 11) ainsi que
- un véhicule de transport (1) selon l'une des revendications précédentes.

8. Système (40) selon la revendication 7, **caractérisé en ce que**
- sur un côté extérieur de ladite au moins une chambre de climatisation fixe (8, 9) et/ou sur un côté extérieur de la chambre de transport (4) du véhicule de transport (1) est prévu un élément d'étanchéité (12, 13) qui est configuré pour former un conduit entre un dispositif d'accès (10, 11) d'une chambre de climatisation fixe (8, 9) et un dispositif d'accès (6, 7) de la chambre de transport (4).

9. Système (40) selon la revendication 8, **caractérisé en ce que**
- le conduit formé par l'élément d'étanchéité (12, 13) est rendu fluidiquement étanche par rapport à un environnement (5) du véhicule de transport (1).

10. Système (40) selon la revendication 8 ou 9, **caractérisé en ce que**
- l'élément d'étanchéité (12, 13) est formé par un soufflet ou par un joint pneumatique.

11. Système (40) selon l'une des revendications 8 à 10, **caractérisé en ce que**
- lors de la formation du conduit, l'élément d'étanchéité (12, 13) respectif est disposé entre la chambre de transport (4) et une chambre de climatisation fixe (8, 9).

12. Système (40) selon l'une des revendications 7 à 11, **caractérisé en ce que**
- le volume de l'espace interne de la chambre de transport (4) s'élève au maximum à 1/100 du volume de ladite au moins une chambre de climatisation fixe (8, 9).

13. Procédé pour transporter une bobine (2) ayant un matériau enroulé en forme de bande à partir de l'espace interne d'une première chambre de climatisation fixe (8) dans l'espace interne d'une seconde chambre de climatisation fixe (9) à l'aide du système selon l'une des revendications 7 à 12, dans lequel
- la bobine (2) dans la chambre de transport (4) du chariot de transport (1) est amenée de la première chambre de climatisation fixe (8) à la seconde chambre de climatisation fixe (9).

14. Procédé selon la revendication 13, **caractérisé par** les étapes de procédé suivantes consistant à :
a) arrimer la chambre de transport (4) du chariot de transport (1) à la première chambre de climatisation fixe (8) ;
b) transférer ensuite une bobine (2) de la première chambre de climatisation fixe (8) à la chambre de transport (4) du véhicule de transport (1) ;
c) isoler ensuite fluidiquement l'espace interne de la chambre de transport (4) par rapport à un environnement (5) du véhicule de transport (1) ;
d) déplacer ensuite le véhicule de transport (1) jusqu'à la seconde chambre de climatisation fixe (9) ;
e) arrimer ensuite la chambre de transport (4) à la seconde chambre de climatisation fixe (9) ;
f) transférer ensuite la bobine (2) de la chambre de transport (4) à la seconde chambre de climatisation fixe (9).
